# EUROPÄISCHE PATENTSCHRIFT

(11) **EP 0 579 918 B1**
(45) Veröffentlichungstag und Bekanntmachung des Hinweises auf die Patenterteilung: **07.08.1996**
(21) Anmeldenummer: 93107679.8
(22) Anmeldetag: 11.05.1993
(51) Int. Cl.: F16B 43/00, F02F 1/24

(54) **Schraubverbindung für einen Zylinderkopf einer Brennkraftmaschine**
Fastening system for a cylinder head of an internal combustion engine
Système de fixation par vissage pour une culasse de moteur à combustion interne

(30) Priorität: 18.07.1992 DE 4223780
(43) Veröffentlichungstag der Anmeldung: 26.01.1994
(73) Patentinhaber: Bayerische Motoren Werke Aktiengesellschaft, 80788 München (DE)
(72) Erfinder: Wimmer, Rudolf, A-4431 Haidershofen (AT)

(56) Entgegenhaltungen:
- EP-A- 0 195 868
- DE-U- 8 700 319
- US-A- 4 510 898

## Beschreibung

Die Erfindung bezieht sich auf eine nach den Gattungsmerkmalen des Patentanspruches 1 gestaltete Schraubverbindung für einen Zylinderkopf einer Brennkraftmaschine.

Um eine einwandfreie Dichtfunktion der zwischen Maschinengehäuse und Zylinderkopf angeordneten Zylinderkopfdichtung zu erreichen, werden über alle Schraubverbindungen eines Zylinderkopfes im wesentlichen gleiche Vorspannkräfte unter Beachtung der bekannten Setzvorgänge in den Schraubverbindungen angestrebt.

So wird beim Gegenstand der gattungsbildenden DE-A 32 28 922 zur Erzielung gleicher Vorspannkräfte bei unterschiedlichen langen Schraubbolzen vorgeschlagen, kurze Schraubbolzen über derart bemessene, kegelförmige Federringe auf den Zylinderkopf einwirken zu lassen, daß diese Federringe zylinderkopfseitig nur mit dem äußeren und schraubenseitig nur mit dem inneren Umfangsbereich aufliegen. Durch die fehlende Plananlage jedes Federringes zwischen den Spannflächen von Zylinderkopf und Schraubbolzen behält jeder Federring seine Federeigenschaft bzw. Elastizität bei, so daß es bei einem Nachlassen der Schraubenvorspannkraft, beispielsweise durch Setzen, zu der gewünschten Vergleichmäßigung der Vorspannkräfte trotz stark unterschiedlicher Schraublängen kommt.

Weiter ist es bei maschinell geschraubten Zylinderköpfen zur Verringerung der Streuung der Schrauben-Vorspannkräfte bekannt, durch Ausbildung kegelförmiger Anlageflächen an den Spannelementen der Schraubverbindungen dem stick-slip-Effekt bzw. dem ruckweisen Gleiten entgegenzuwirken. Zusätzlich dienen mit einem Gleitmittel beschichtete Unterlegscheiben der Einengung der Reibwertstreuungen.

Ein weiterer wesentlicher Einfluß auf die Streuung der Vorspannkräfte geht von den zylinderkopfseitigen Auflageflächen aus, wobei Abweichungen in den Winkellagen zu den Achsen der Schraubbolzen und/oder in den geometrischen Formen vor allem bedeutsam sind. Derartige fertigungsbedingte Form- und Winkelabweichungen sowie ungünstige Reibverhältnisse zwischen Spannelement und Unterlegscheibe einerseits sowie zwischen dieser und dem Zylinderkopf andererseits sind als wesentliche Ursache für das Mitdrehen der Unterlegscheibe beim Schraubenanziehen anzusehen. Durch Mitdrehen der Unterlegscheiben treten in nachteiliger Weise starke Streuungen in den Schrauben-Vorspannkräften auf, was unter Umständen zu kostenaufwendigem Nachziehen von Hand führt.

Desweiteren ergeben sich aus den oben genannten fertigungsbedingten Form- und Winkelabweichungen im Bereich der zylinderkopfseitigen Auflageflächen örtlich hohe Flächenpressungen mit bleibenden Verformungen.

Der Erfindung liegt die Aufgabe zugrunde, eine gattungsgemäße Schraubverbindung für einen Zylinderkopf so zu gestalten, daß beim Schraubenanzug ein Mitdrehen der Unterlegscheiben vermieden und die zylinderkopfseitige Auflagefläche bei korrektem Schraubenanzug gleichmäßig gepreßt ist.

Diese Aufgabe wird mit den im Kennzeichen des Patentanspruches 1 angegebenen Merkmalen gelöst. Die erfindungsgemäße Gestaltung der zylinderkopfseitigen Auflagefläche bewirkt zum einen, daß eine ebene Unterlegscheibe am Beginn des Schraubenanzuges durch einen größtmöglichen Abstand von der Achse des Schraubbolzens in einer dem Mitdrehen entgegenwirkenden reibschlüssigen Verbindung mit dem Zylinderkopf steht, wogegen das Spannelement der Schraubverbindung über die kegelförmige Anlagefläche zunächst in einem kleinstmöglichen Abstand von der Achse des Schraubbolzens an der Unterlegscheibe gleitbeweglich angreift. Diese zwar an sich aus der DE-C 37 42 585 zur Drehsicherung von verschraubbaren Teilen bekannte Ausgestaltung mittels unterschiedlicher Reibradien ergibt in erfinderischer Kombination mit der kegelförmig vertieften Auflagefläche im Zylinderkopf zum anderen den überraschenden Effekt einer gleichmäßigen Flächenpressung in der Auflagefläche.

Dieser Effekt der Flächenpressung beruht darauf, daß die zunächst ebene, nachgiebige Unterlegscheibe zu Beginn des Schraubenanzuges mit einem äußeren Umfangsrand auf einer vom Schraubbolzen femen, höchsten Stelle der Auflagefläche aufliegt, und von hier aus einwärts fortschreitend der kegelförmig vertieften Auflagefläche durch Verformung mittels des eine im wesentlichen korrespondierende Auflagefläche aufweisenden Spannelementes der Verschraubung angepaßt wird. Winkel- und Formabweichungen der kegeligen Auflagefläche werden somit großflächig im wesentlichen durch die elastisch verformte Unterlegscheibe kompensiert, so daß plastische Verformungen in an die Auflagefläche angrenzenden Teilen des Zylinderkopfes vermieden sind. Mit dem Fortfall plastischer Verformungen werden in der Schraubverbindung auch größere Setzvorgänge vermieden, wodurch die Streuung der Vorspannkräfte in der Schraubverbindung ebenfalls verringert wird.

Praktisch bedeutet eine geringere Streuung der Schrauben-Vorspannkräfte bei Brennkraftmaschinen mit maschinell geschraubten Zylinderköpfen weniger undichte Zylinderkopfdichtungen. Außerdem verringert sich mit der erfindungsgemäßen Schraubverbindung die Standzeit in der Schraubstation, da die Anzahl der nicht ordnungsgemäß angezogenen Zylinderkopf-Schrauben deutlich kleiner ist. Vorteilhafte Ausgestaltungen der Erfindung sind in den Unteransprüchen aufgezeigt.

Die Erfindung ist anhand einer Schnittzeichnung im Bereich einer Schraubenpfeife eines Zylinderkopfes beschrieben.

Ein lediglich abschnittsweise dargestellter Zylinderkopf 1 umfaßt eine Schraubenpfeife 2 mit einer Durchgangsbohrung 3 für eine Kopfschraube 4, die der lösbaren Verbindung des Zylinderkopfes 1 mit einem nicht gezeigten Maschinengehäuse unter Zwischenschaltung einer Zylinderkopfdichtung dient. Die aus Stahl gefertigte Kopfschraube 4 wirkt auf den aus einer Leichtmetall-Legierung hergestellten Zylinderkopf 1 über eine Unterlegscheibe 5 ein.

Auf die zunächst im wesentlichen ebene, nachgiebige Unterlegscheibe 5 wirkt die Kopfschraube 4 über eine am Schraubenkopf 6 angeordnete kegelförmige Anlagefläche 7 ein. Diese kegelförmige Anlagefläche 7 schließt mit einer Orthogonalen zur Achse 8 der Kopfschraube 4 bzw. mit der Oberseite 9 der ebenen Unterlegscheibe 5 einen Kegelneigungswinkel von ca. 20' ein, und zwar derart, daß die Anlagefläche 7 zunächst lediglich über einen kleinsten Radialabstand R₁ von der Achse 8 der Kopfschraube 4 mit der Oberseite 9 der Unterlegscheibe 5 in Reibverbindung steht.

Weiter weist der Zylinderkopf 1 als Auflagefläche 10 für die Unterlegscheibe 5 eine zur Durchgangsbohrung 3 koaxial angeordnete kegelförmige Vertiefung 11 auf. Diese Auflagefläche 10 schließt mit einer Orthogonalen zur Achse 8 der Kopfschraube 4 bzw. mit der Unterseite 12 der Unterlegscheibe 5 einen Kegelneigungswinkel von ca. 25' für den aus Leichtmetall gefertigten Zylinderkopf 1 ein. Die mit der schraubenkopfseitigen Anlagefläche 7 bezüglich der Kegelanordnung korrespondierende zylinderkopfseitige Auflagefläche 10 in der Vertiefung 11 weist eine die Unterlegscheibe 5 im Außendurchmesser überschreitende Abmessung auf. Das heißt, daß die Unterlegscheibe 5 am Beginn des vorzugsweise maschinellen Anziehens der Kopfschraube 4 über einen größten Radialabstand R₂ von der Achse 8 der Kopfschraube 4 in einer dem Mitdrehen entgegenwirkenden reibschlüssigen Verbindung mit dem Zylinderkopf 1 steht.

Die Anordnung der zylinderkopfseitigen Auflagefläche 10 in der kegelförmigen Vertiefung 11 ergibt in Verbindung mit einem der jeweiligen Materialpaarung von Kopfschraube 4 und Zylinderkopf 1 erfindungsgemäß gewählten Kegelneigungswinkel für die Vertiefung 11 durch eine Verformung der Unterlegscheibe 5 mit großflächiger Anpassung ihrer Ober- und Unterseite 9 und 12 an die schraubenkopfseitige Anlage 7 und die zylinderkopfseitige Auflagefläche 10 beim Anziehen der Kopfschraube 4 eine im wesentlichen gleichmäßige Flächenpressung in der Auflagefläche 10 des Zylinderkopfes 1. Ausgangspunkt für diese großflächige Anpassung der Unterlegscheibe 5 beim Anziehen der Kopfschraube 4 ist der zunächst zur Drehsicherung mit der kegelförmigen Auflagefläche 10 reibschlüssig zusammenwirkende äußere Umfangsrand 13 im Radial- bzw. Reibabstand R₂, von dem aus die Unterlegscheibe in Richtung Kopfschraube 4 fortschreitend über den Schraubenkopf 6 in die Vertiefung 11 verformt wird. Wesentlich hierfür sind bei einer Materialpaarung einer Kopfschraube 4 aus Stahl und einem Zylinderkopf 1 aus einer Leichtmetall-Legierung die bereits weiter vorne angegebenen Kegelneigungswinkel von 20' für die Auflagefläche 7 am Schraubenkopf 6 und von 25' für die Auflagefläche 10 in der kegelförmigen Vertiefung 11 .

Kern der Erfindung ist es demnach, materialabhängig geeignete Kegelneigungswinkel für die schraubenkopfseitige Anlagefläche 7 und die zylinderkopfseitige Auflagefläche 10 aufzuzeigen, die neben einer reibschlüssigen Drehsicherung der Unterlegscheibe 5 beim Anziehen der Kopfschraube 4 weiter eine Verformung der Unterlegscheibe 5 mit gleichmäßiger Flächenpressung in der zylinderkopfseitigen Auflage 10 ermöglichen. Bei richtig gewählten Kegelneigungswinkeln kann die Unterlegscheibe 5 mit einem Gleitmittel beschichtet sein, ohne daß dadurch die reibschlüssige Drehsicherung beeinträchtigt ist.

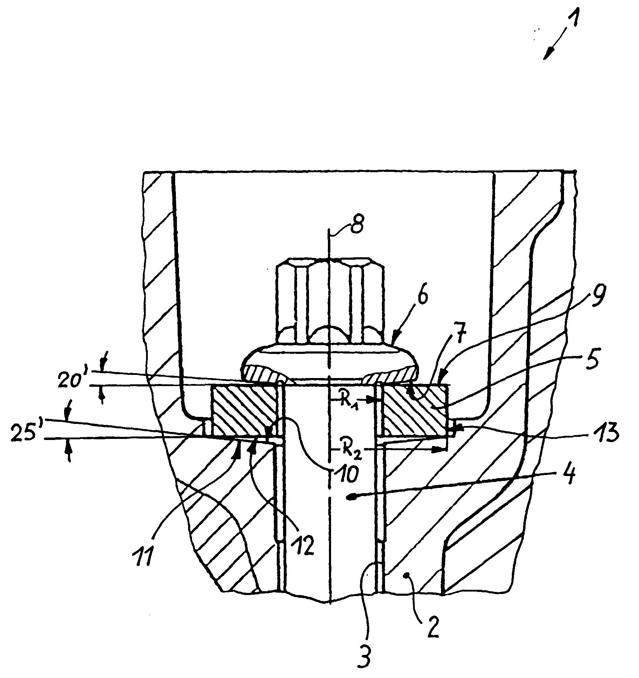

## Patentansprüche

1. Schraubverbindung für einen Zylinderkopf einer Brennkraftmaschine,
- wobei in einem Maschinengehäuse anordbare Schraubbolzen (Kopfschraube 4) über Spannelemente (Schraubenkopf 6) unter Zwischenlage elastisch kegelig verformbarer Unterlegscheiben (5) mit dem Zylinderkopf (1) in Verbindung stehen,
dadurch gekennzeichnet,
- daß eine im wesentlichen ebene Unterlegscheibe (5) vorgesehen ist, der
- am Spannelement (Schraubenkopf 6) eine kegelförmige Anlagefläche (7) mit einem zur ebenen Unterlegscheibe (5) relativen Kegelneigungswinkel zwischen 5' (Minuten) und 50' (Minuten) und der
- am Zylinderkopf (1) als Auflagefläche (10) eine kegelförmige Vertiefung (11) mit einem materialabhängig entsprechend angepaßten Kegelneigungswinkel zugeordnet ist, wobei
- die kegelförmige Vertiefung (11) eine dem Außendurchmesser (Umfangsrand 13) der zunächst ebenen Unterlegscheibe (5) überschreitende Abmessung aufweist derart, daß
- die Unterlegscheibe (5) beim Schraubenanzug über die spannelementseitige Anlagefläche (7) vom Schraubbolzen (Kopfschraube 4) aus fortschreitend zum Umfangsrand (13) hin beaufschlagt ist bis zur Anlage an Auflagefläche (10) und Anlagefläche (7).

2. Schraubverbindung nach Anspruch 1, dadurch gekennzeichnet, daß in einer Kombination eines aus Eisenwerkstoff gebildeten Spannelementes (Schraubenkopf 6; Schraubenmutter) mit einem Zylinderkopf (1) aus Nichteisenmetall der Kegelneigungswinkel der zylinderkopfseitigen Auflagefläche (10) zwischen 10' (Minuten) und 30' (Minuten) gewählt ist.

3. Verschraubung nach Anspruch 1 und 2, dadurch gekennzeichnet, daß in einer Kombination einer Kopfschraube (4) aus Stahl mit einem Leichtmetall-Zylinderkopf (1) der Kegelneigungswinkel der schraubenkopfseitigen Anlagefläche (7) etwa zu 20' (Minuten) und der der zylinderkopfseitigen Auflagefläche (10) etwa zu 25' (Minuten) gewählt ist.

4. Verschraubung nach den Ansprüchen 1 bis 3, dadurch gekennzeichnet, daß die Unterlegscheibe (5) gleitmittelbeschichtet ist.

## Claims

1. A threaded connection for a cylinder head of an internal combustion engine
- wherein threaded bolts (head bolt 4) arranged in an engine housing are connected to the cylinder head (1) via tension elements (bolt head 6) with the interposition of elastic, conical, deformable plain washers (5),
characterised in that
- one substantially flat plain washer (5) is provided, which is assigned
- to a conical contact surface (7) on the tensioning element (bolt head 6) with a conical angle of inclination between 5' (minutes) and 50' (minutes) relative to the flat plain washer (5)
- and to a conical recess (11) as supporting surface (10) on the cylinder head (1) with a material-dependent, correspondingly-matched conical angle of inclination, wherein
- the conical recess (11) is provided with a dimension exceeding the external diameter (circumferential edge 13) of the initially flat plain washer (5), such that
- upon tightening of the bolt, the plain washer (5) is subjected to pressure from the threaded bolt (head bolt 4) via the contact surface (7) on the tension element side progressively in the direction of the circumferential edge (13) until abutment against the supporting surface (10) and contact surface (7).

2. A threaded connection according to claim 1, characterised in that the conical angle of inclination of the supporting surface (10) on the cylinder head side is chosen between 10' (minutes) and 30' (minutes) for a combination of a tension element (bolt head 6; nut) of ferrous material and a cylinder head (1) of non-ferrous material.

3. A threaded connection according to claim 1 and claim 2, characterised in that the conical angle of inclination of the contact surface (7) on the bolt head side is approximately 20' (minutes) and that of the supporting surface (10) on the cylinder head side is approximately 25' (minutes) for a combination of head bolt (4) of steel and a cylinder head (1) of light alloy.

4. A threaded connection according to claims 1 to 3, characterised in that the plain washer (5) is coated with lubricant.

## Revendications

1. Dispositif de liaison à vis pour une culasse d'un moteur à combustion interne, dans lequel
- une vis (vis à tête 4), destinée à être montée dans le corps du moteur, coopère par des éléments de serrage (tête de vis 6), avec interposition de rondelles de forme conique(5) déformables élastiquement, avec la culasse (1),
caractérisé en ce que
- il est prévu une rondelle (5) essentiellement plane
- à laquelle est associée
- sur l'élément de serrage (tête de vis 6), une surface d'appui (7) conique avec un angle au sommet par rapport à la rondelle plane (5), compris entre 5' (minutes) et 50' (minutes) et
- sur la culasse (1), comme surface d'appui (10), une cavité conique (11) dont l'angle au sommet du cône est adapté en fonction du choix des matières,
- la cavité conique (11) présente une dimension qui dépasse le diamètre extérieur (bord périphérique 13) de la rondelle (5) tout d'abord plane,
- la rondelle (5), lors du serrage de la vis, est sollicitée par la surface d'appui (7), du côté de l'élément de serrage, par la vis (vis à tête 4), en progressant à partir du bord périphérique (13) jusqu'à la venue en appui de la surface d'appui (10) sur la surface d'appui (7).

2. Dispositif de liaison à vis selon la revendication 1, caractérisé en ce que, dans une combinaison d'un élément de serrage (tête de vis 6, écrou) réalisé en fer, avec une culasse (1) en un métal non ferreux, on choisit comme angle au sommet du cône de la surface d'appui (10) au niveau de la culasse, un angle compris entre 10' et 30'.

3. Dispositif de liaison à vis selon les revendications 1 et 2, caractérisé en ce que dans une combinaison d'une vis à tête (4) en acier avec une culasse (1) en métal léger, l'angle au sommet du cône de la surface d'appui (7), au niveau de la tête de vis est choisi de l'ordre de 20' et celui de la surface d'appui (10) du côté de la culasse est choisi à environ 25'.

4. Dispositif de liaison à vis selon les revendications 1 à 3, caractérisé en ce que la rondelle (5) est revêtue d'un agent de glissement.
